# EUROPÄISCHE PATENTANMELDUNG

(11) **EP 4 088 563 A2**
(43) Veröffentlichungstag der Anmeldung: **16.11.2022**
(21) Anmeldenummer: 22173133.4
(22) Anmeldetag: 12.05.2022
(51) Int. Cl.: A01F 29/09, B02C 18/06, C21D 9/00, A01F 29/06

(54) **MESSERTROMMEL INSBESONDERE FÜR EINEN FELDHÄCKSLER**

(30) Priorität: 12.05.2021 DE 202021102622 U
(71) Anmelder: Wagner, Martin, 86759 Wechingen / Fessenheim (DE)
(72) Erfinder: Wagner, Martin, 86759 Wechingen / Fessenheim (DE)
(74) Vertreter: Jannig & Repkow Patentanwälte PartG mbB

(57) **Zusammenfassung**

Es wird eine Messertrommel beschrieben, die als Schneidorgan einer Häcksel- oder Schreddervorrichtung, insbesondere als Schneidorgan eines Feldhäckslers verwendbar ist und zur Zerkleinerung von zu zerkleinerndem Material, insbesondere zur Zerkleinerung von Erntegut ausgelegt ist, umfassend eine zylinderförmige, um ihre Längsachse drehbare Trommel, an der Mantelfläche der Trommel vorgesehene Messerhalter, und an den Messerhaltern befestigte Messer zur Zerkleinerung des zu zerkleinernden Materials. Die Messertrommel zeichnet sich dadurch aus, dass die Trommel und die daran vorgesehenen Messerhalter eine durch ein einzelnes Frästeil gebildete zusammenhängende Einheit sind. Sie zeichnet sich ferner dadurch aus, dass die Messer mit an den Messerhaltern vormontierbaren Gewindeleisten verschraubt sind.

## Beschreibung

Die vorliegende Erfindung betrifft eine Messertrommel gemäß dem Oberbegriff der Patentansprüche 1 und 3, also eine Messertrommel insbesondere für einen Feldhäcksler.

Ein Feldhäcksler ist ein landwirtschaftliches Gerät zur Aufnahme, Zerkleinerung und Verladung von Erntegut wie Gras, Luzerne, Mais, etc. insbesondere für die Bereitung von Silage bzw. Ganzpflanzensilage, aber auch für die Ernte nachwachsender Rohstoffe.

Feldhäcksler sind seit vielen Jahren in den unterschiedlichsten Ausführungsformen bekannt. Die bekannten Feldhäcksler unterscheiden sich unter anderem hinsichtlich der Bauart der Schneidorgane, also des Häckselwerkes, durch welches die Zerkleinerung des Ernteguts erfolgt.

Vorliegend interessieren insbesondere die sogenannten Trommelfeldhäcksler, bei welchen das Schneidorgan durch eine Messer- bzw. Häckslertrommel gebildet wird.

Eine solche Messertrommel ist eine zylinderförmige, um ihre Längsachse drehbare Trommel, die an ihrer Mantelfläche Messerhalter aufweist, an welchen zur Zerkleinerung des Ernteguts dienende Messer befestigt sind.

Bei den besagten Trommelfeldhäckslern wird das Erntegut entweder über eine sogenannte Pickup, oder direkt von einem Mähwerk, oder von einem Maisgebiss aus aufgenommen und zu der als Schneidorgan (und üblicherweise zugleich als Wurforgan) dienenden, schnell um Ihre Längsachse rotierenden Messertrommel zugeführt. Die Messertrommel ist im rechten Winkel zum Erntegutstrom angeordnet und mit einer Vielzahl von Messern bestückt. Bei der Ernte von Futtermais ist hinter der Messertrommel noch ein zusätzlicher Aufbereiter erforderlich, der die Maiskörner aufquetscht und damit für die Tiere verdaubar macht. Aufgrund der begrenzten Wurfweite der Messertrommel wird das zerkleinerte Erntegut mittels eines Nachbeschleunigers über einen Turm des Feldhäckslers auf einen Anhänger desselben oder ein neben und/oder hinter dem Feldhäcksler herfahrendes Transportfahrzeug geworfen.

Die von einem Feldhäcksler pro Zeiteinheit häckselbare Erntegutmenge ist enorm. Um jedoch beispielsweise die von einem Mais-Schneidwerk mit zehn Metern Arbeitsbreite geerntete Erntegutmenge schritthaltend häckseln zu können, müssen entsprechend leistungsfähige Antriebe für die Messertrommel und entsprechend belastbare Messertrommeln verfügbar sein. Mittlerweile sind für den Messertrommelantrieb Motorleistungen von über 800 kW verfügbar.

Die Messertrommeln bestehen üblicherweise aus Stahl und sind so dimensioniert, dass sie durch die im normalen Betrieb auftretenden Kräfte nicht beschädigt werden. Die Erfahrung zeigt jedoch, dass die herkömmlichen Messertrommeln dennoch immer wieder beschädigt werden. Ursachen hierfür sind unter anderem Verstopfungen im Bereich der Messertrommel und/oder ins Erntegut gelangte Steine oder sonstige Fremdkörper. In solchen außergewöhnlichen Situationen wirken auf die Messertrommel noch größere Kräfte als es ohnehin schon der Fall ist. Die dadurch hervorgerufenen Beschädigungen betreffen nicht nur die Messer sondern auch die Messerhalter und die Trommel. Insbesondere Schäden an den Messerhaltern und/oder der Trommel erfordern sehr aufwendige Reparaturen, die zu einem entsprechend langen Stillstand des Feldhäckslers führen. Hierbei ist zu berücksichtigen, dass auch kleinere Beschädigungen unverzüglich repariert werden sollten. Fast jede Beschädigung hat nämlich auch eine Unwucht der Messertrommel zur Folge, was bei dem hohen Gewicht und der sehr hohen Drehzahl der Messertrommel innerhalb kurzer Zeit zu erheblichen Folgeschäden führen kann.

Der vorliegenden Erfindung liegt daher die Aufgabe zugrunde, eine Möglichkeit zu finden, durch welche sich die Häufigkeit und/oder die Schwere der Beschädigungen der Messertrommel verringern lässt, oder zumindest die Reparatur von aufgetretenen Schäden vereinfachen und beschleunigen lässt.

Diese Aufgabe wird erfindungsgemäß durch die in den Patentansprüchen 1 und 3 beanspruchte Messertrommel gelöst.

Die erfindungsgemäße Messertrommel gemäß Patentanspruch 1 zeichnet sich dadurch aus, dass deren Trommel und die daran vorgesehenen Messerhalter eine durch ein einzelnes Frästeil gebildete zusammenhängende Einheit sind.

Eine so beschaffene Messertrommel weist gegenüber einer herkömmlichen Messertrommel, bei welcher die Trommel und die Messerhalter anderweitig miteinander verbunden, beispielsweise miteinander verschweißte Einzelteile sind, ein ganze Reihe vor Vorteilen auf.

Erstens besteht zwischen durch Schweißen oder eine sonstige nachträgliche Verbindung verbundenen Einzelteilen keine so feste Verbindung wie zwischen von Haus aus zusammenhängenden, noch nie voneinander getrennten Abschnitten eines Frästeils. Folglich können sich die Messerhalter der erfindungsgemäßen Messertrommel selbst bei größten Belastungen nicht relativ zur Trommel bewegen oder sich gar von dieser lösen, auch nicht punktuell. Dadurch hält die erfindungsgemäße Messertrommel höheren Belastungen stand und wird weniger häufig und/oder weniger stark beschädigt.

Zweitens lassen sich Frästeile mit höherer Präzision herstellen als aus Einzelteilen zusammengesetzte Vorrichtungen. Insbesondere ist bei einem Frästeil gewährleistet, dass die Trommel und jeder der Messerhalter sowie die Messerhalter untereinander exakt die vorgegebene Relativlage aufweisen. Außerdem besteht anders als etwa beim Schweißen nicht die Gefahr, dass sich die Einzelteile bei deren Verbindung verformen. Dadurch ist die erfindungsgemäße Messertrommel von Haus aus besser ausgewuchtet und somit geringeren Belastungen im Betrieb ausgesetzt als es bei herkömmlichen Messertrommeln der Fall ist.

Die erfindungsgemäße Messertrommel gemäß Patentanspruch 3 zeichnet sich dadurch aus, dass die Messer mit an den Messerhaltern vormontierbaren Gewindeleisten verschraubt sind.

Eine so beschaffene Messertrommel weist gegenüber einer herkömmlichen Messertrommel, bei welcher keine vormontierbaren Gewindeleisten vorgesehen sind, den Vorteil auf, dass die Messer schneller und einfacher montierbar und austauschbar sind.

Vorteilhafte Weiterbildungen der Erfindung sind der folgenden Beschreibung, den Figuren, und den Unteransprüchen entnehmbar.

Die Erfindung wird nachfolgend anhand von Ausführungsbeispielen unter Bezugnahme auf die Figuren näher erläutert. Es zeigen
- Figur 1: eine perspektivische Ansicht eines Frästeils der im Folgenden näher beschriebenen Messertrommel,
- Figur 2: eine Seitenansicht, genauer gesagt eine axiale Ansicht des in der Figur 1 gezeigten Frästeils,
- Figur 3: eine weitere Seitenansicht, genauer gesagt eine radiale Ansicht des in der Figur 1 gezeigten Frästeils.
- Figur 4: eine Seitenansicht, genauer gesagt eine axiale Ansicht eines modifizierten, zweiten Ausführungsbeispiels des Frästeils
- Figur 5: eine weitere Seitenansicht, genauer gesagt eine radiale Ansicht des in der Figur 4 gezeigten Frästeils,
- Figur 6: das in den Figuren 4 und 5 gezeigte Frästeil mit einem daran angebrachten einzelnen Messer,
- Figur 7: eine perspektivische Ansicht einer Gewindeleiste, unter Verwendung welche die Messer am Frästeil montiert werden, und
- Figur 8: eine Ansicht eines Messerhalters der Frästeils mit daran montiertem Messer zur Veranschaulichung der Messermontage.

Zur Vermeidung von Missverständnissen sei bereits an dieser Stelle ausdrücklich darauf hingewiesen, dass in den Figuren nicht die komplette Messertrommel gezeigt ist, die im Folgenden näher beschrieben wird, sondern vor allem eine aus einem Rohling herausgefräste und daher als Frästeil bezeichnete Komponente derselben. Dieses Frästeil stellt einen wesentlichen Bestandteil der Messertrommel dar. Zur vollständigen Messertrommel fehlen dem Frästeil aber die in den Figuren nur teilweise gezeigten Messer der Messertrommel sowie das zur Messermontage benötigte Montagezubehör. Die Messer sind am Frästeil anzubringende und vorzugsweise austauschbare Komponenten der Messertrommel und werden, wie später noch näher erläutert wird, an zugeordneten Messerhaltern des Frästeils befestigt.

Die hier vorgestellte Messertrommel ist dazu ausgelegt, als Häckseltrommel eines Feldhäckslers verwendet zu werden, also das Schneideorgan (und eventuell zugleich das Wurforgan) des Feldhäckslers zu bilden, durch welches das zu häckselnde Erntegut zerkleinert bzw. zerschnitten wird.

Die hier vorgestellte Messertrommel könnte zumindest nach Anpassung derselben an das zu zerkleinernde Material, das zu erzielende Ergebnis, die gewünschte Arbeitsgeschwindigkeit und an die sonstigen gegebenen Verhältnisse und Vorgaben auch in beliebigen anderen Häcksel- oder Schreddervorrichtungen zum Einsatz kommen, in welchen eine Zerkleinerung und/oder ein Zerschneiden von wie auch immer gearteten Materialien / Gegenständen unter Verwendung einer Messertrommel erfolgt, beispielsweise in Häcksel- oder Schreddervorrichtungen, die zum Zerkleinern / Zerschneiden von Ästen, Holz, oder sonstigen nachwachsenden Rohstoffen, oder zum Zerkleinern / Zerschneiden von bestimmten Abfällen, oder zum Zerkleinern / Zerschneiden von beliebigen sonstigen zu zerkleinernden / zu zerschneidenden Materialen vorgesehen sind.

Die Messertrommel wird zusammen mit den daran montierten Messern in den Feldhäcksler eingebaut. Die hier vorgestellte Messertrommel ersetzt die herkömmlichen Messertrommeln, die bisher in Feldhäcksler eingebaut werden. Der Einsatz der neuen Messertrommel in einem Feldhäcksler erfordert keine Anpassungen des Feldhäckslers an die neue Messertrommel. Die hiervorgestellte Art von Messertrommel kann also prinzipiell in alle herkömmlichen Trommel-Feldhäcksler eingebaut werden. Die höhere Belastbarkeit der hier vorgestellten Messertrommel und die höhere Widerstandsfähigkeit derselben gegen besonders hohe Belastungen ermöglichen es jedoch zumindest in bestimmten Fällen, den Feldhäcksler für eine höhere Häcksel-Leistung auszulegen, also beispielsweise mit einer höheren Messertrommel-Drehzahl zu betreiben und/oder mit einem stärkeren Messertrommel-Antrieb auszustatten.

Während des Häckselns wird die Messertrommel mit hoher Geschwindigkeit um ihre zugleich die Rotationsachse bildende Längsachse gedreht. Dadurch wird das der Messertrommel zugeführte Erntegut durch die an der Messertrommel vorgesehenen Messer zerschnitten. Vorzugsweise wird die Messertrommel an die gegebenen Verhältnisse und Vorgaben angepasst. Damit kann - beispielsweise durch Auswahl geeigneter Messer und Anpassung der Messeranzahl - jeweils die maximale Leistung des Messertrommel-Antriebes ausgenutzt werden.

Die hier vorgestellte Messertrommel zeichnet sich unter anderem dadurch aus, dass die Trommel und die daran vorgesehenen Messerhalter eine zusammenhängende Einheit sind, die durch das bereits erwähnte einzelne Frästeil gebildet wird. Eine mögliche Ausführungsform eines solchen Frästeils ist in mehreren verschiedenen Ansichten und Ausführungsformen in den Figuren gezeigt.

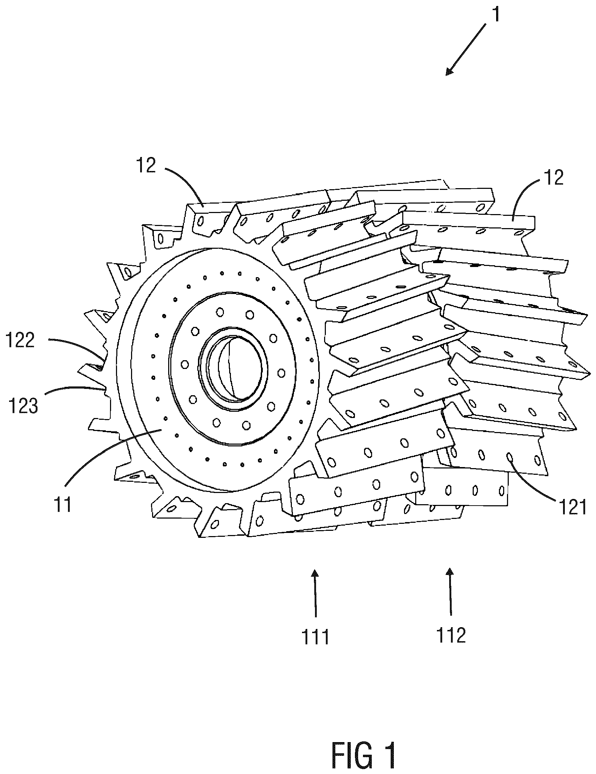

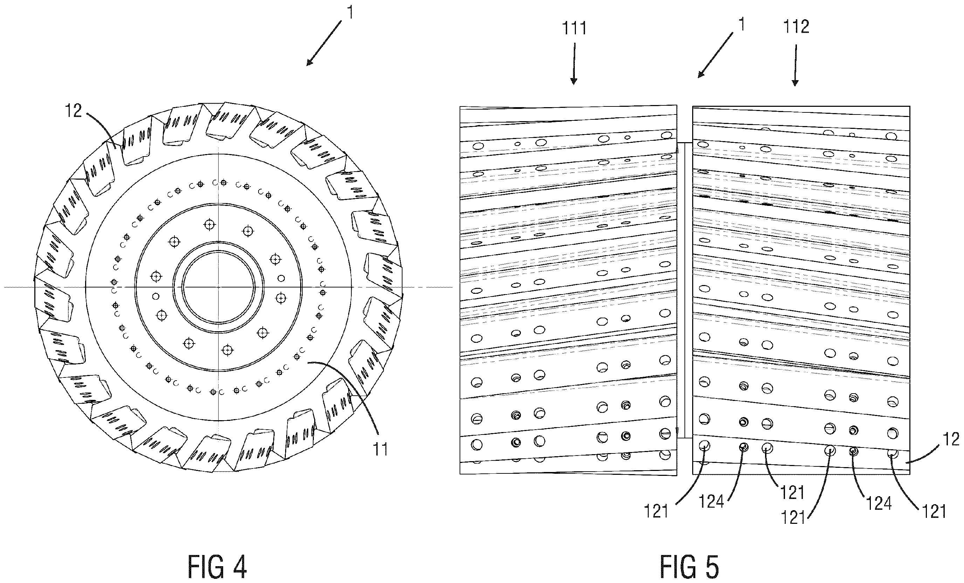

Im Folgenden werden zwei Ausführungsbeispiele des hier vorgestellten Frästeils beschrieben. Das erste Ausführungsbeispiel ist in den Figuren 1 bis 3 gezeigt, und das zweite Ausführungsbeispiel in den Figuren 4 bis 8.

Es wird nun zunächst das in den Figuren 1 bis 3 gezeigte erste Ausführungsbeispiel des Frästeils der hier vorgestellten Messertrommel beschrieben.

Das in den Figuren 1 bis 3 gezeigte Frästeil der hier vorgestellten Messertrommel ist in den Figuren mit dem Bezugszeichen 1 bezeichnet. Das Frästeil 1 umfasst eine zylinderförmige, um ihre Längsachse drehbare Trommel 11, an deren Mantelfläche eine Vielzahl von im wesentlich radial nach außen abstehenden Messerhaltern 12 ausgebildet ist. Die Messerhalter 12 dienen zur Befestigung der an der Messertrommel vorzusehenden, in den Figuren 1 bis 3 nicht gezeigten Messer.

Jeder der Messerhalter 12 wird durch eine von der Mantelfläche emporragende längliche Erhebung gebildet, die eine etwa der Länge der Messer entsprechenden Länge aufweist und über ihre gesamte Länge eine konstante Höhe aufweist, wobei alle Messerhalter 12 gleich lang, gleich hoch und gleich breit bzw. dick sind. Die der Trommel 11 zugewandten unteren Endabschnitte der Messerhalter sind über deren gesamte Länge vollflächig mit der Trommel verbunden und bilden mit der Trommel eine zusammenhängende untrennbare Einheit. Die Messerhalter 12 sind in ihren der Trommel 11 zugewandten unteren Endabschnitten verstärkt. Genauer gesagt weisen sie in diesem Bereich eine größere Dicke als weiter oben auf. Wie insbesondere aus Figur 1 ersichtlich ist, fallen sie im betrachteten Beispiel auf einer Seite über einen im unteren Endabschnitt des Messerhalters ausgebildeten Rampenabschnitt 122 des jeweiligen Messerhalters rampenförmig zur Trommel 11 hin ab, und auf der gegenüberliegenden Seite über eine im unteren Endabschnitt des Messerhalters ausgebildete Stufe 123 des jeweiligen Messerhalters stufenförmig zur Trommel 11 hin ab.

Die Rampenabschnitt 122 und die Stufen 123 der jeweiligen Messerhalter erstrecken sich jeweils über die gesamte Länge der Messerhalter 12.

Wie vorstehend bereits erwähnt wurde, sind die Messerhalter 12 zur Befestigung der Messer der Messertrommel am Frästeil 1 vorgesehen. Genauer gesagt wird an jedem der Messerhalter 12 ein Messer befestigt. Im betrachteten Beispiel erfolgt die Befestigung durch eine Schraubverbindung. Zu diesem Zweck sind an jedem Messerhalter 12 mehrere Löcher zur Messerbefestigung 121 vorgesehen, durch welche die zur Messerbefestigung verwendeten Schrauben hindurchführbar sind. Im betrachteten Beispiel sind pro Messerhalter vier Befestigungslöcher 121 vorgesehen. Die Anzahl der Befestigungslöcher pro Messerhalter könnte jedoch auch höher oder niedriger sein.

Die Messer weisen eine entsprechende Anzahl von Löchern auf, die bei bestimmungsgemäßer Montage mit den Löchern 121 der Messerhalter 12 zur Deckung kommen. Vorzugsweise sind die in den Messern vorgesehenen Löcher Langlöcher, deren Längsseiten rechtwinklig zur Längsachse der Trommel 11 verlaufen. Diese Langlöcher ermöglichen es, die Messer in einer gewünschten Relativlage in Bezug zu den Messerhaltern zu montieren. Dies ist vor allem beim Ersatz eines einzelnen, beispielsweise beim Ersatz eines beschädigten Messers von Bedeutung. Dann kann das neue, noch nicht abgenutzte und entsprechend höhere Messer so montiert werden, dass die Schneiden aller Messer den selben Abstand zur Drehachse der Trommel aufweisen. Hierdurch lassen sich ein ungleichmäßiges Schnittergebnis der Messertrommel und/oder ein ungleichmäßiger Lauf derselben vermeiden. Die vorstehend bereits erwähnte Stufe 122 ist als Messerauflage verwendbar.

Die Messerhalter 12 erstrecken sich ungefähr in Richtung der Längsachse des Frästeils, verlaufen aber vorzugsweise nicht parallel zu dieser. Im betrachteten Beispiel verlaufen sie ähnlich wie die Zähne eines für Schrägverzahnung ausgelegten Zahnrades in einem bestimmten Winkel schräg zur Rotationsachse. Im betrachteten Beispiel beträgt dieser Winkel 8°. Er kann aber auch größer oder kleiner sein. Durch den schrägen Verlauf der Messerhalter 12 und der daran angebrachten Messer wird durch die Messer ein scherenartiger Schnitt ausgeführt, was zu einer weniger ruckartigen, zeitlich konstanten Belastung der Messertrommel führt und einen ruhigeren Lauf derselben zur Folge hat. Dies wird zusätzlich noch dadurch begünstigt, dass die Messerhalter 12 und damit auch die daran angebrachten Messer nicht exakt radial von der Trommel nach außen abstehen, sondern in einem gegenüber der Radialen geneigten Winkel.

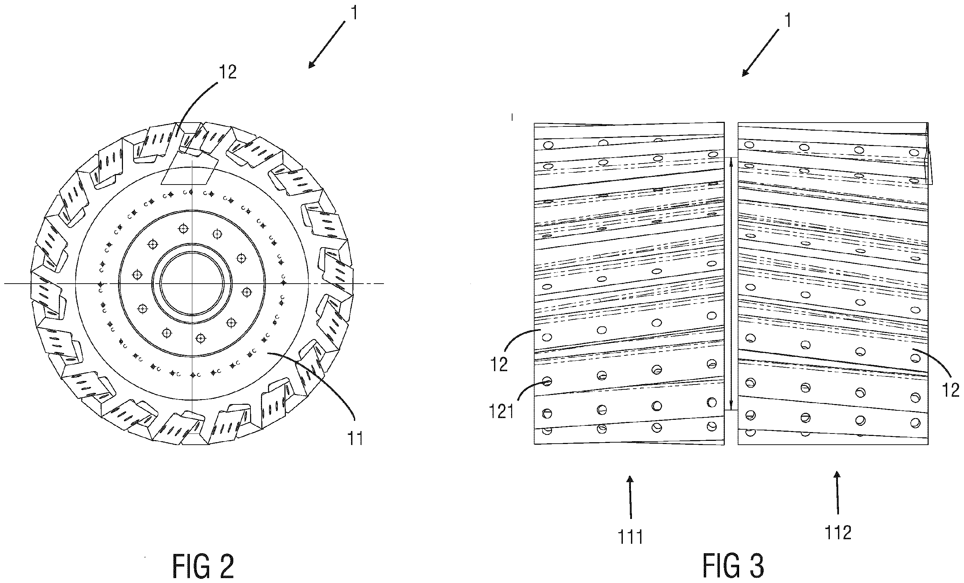

Im betrachteten Beispiel ist die Mantelfläche der Trommel 11 in zwei in Längsrichtung der Trommel aufeinanderfolgende, gleich große Trommelbereiche 111 und 112 unterteilt. In jedem der Trommelbereiche 111, 112 ist eine Vielzahl von Messerhaltern 12 vorgesehen. Genauer gesagt ist es so, dass
- in dem in der Figur 1 vorn und in der Figur 3 links dargestellten ersten Trommelbereich 111 eine Vielzahl von parallel zueinander verlaufenden ersten Messerhaltern 12 vorgesehen ist, und
- in dem in der Figur 1 hinten und in der Figur 3 rechts dargestellten zweiten Trommelbereich 111 eine Vielzahl von parallel zueinander verlaufenden zweiten Messerhaltern 12 vorgesehen ist,
- wobei die Anzahl der ersten Messerhalter 12 des ersten Trommelbereichs 111 vorzugsweise gleich der Anzahl der zweiten Messerhalter 12 des zweiten Trommelbereichs 112 ist, und die ersten Messerhalter 12 des ersten Trommelbereichs 111 und die zweiten Messerhalter 12 des zweiten Trommelbereichs 112 identisch ausgebildet sind, und
- wobei die ersten Messerhalter 12 des ersten Trommelbereichs 111 und die zweiten Messerhalter 12 des zweiten Trommelbereichs 112 nicht parallel zueinander verlaufen und darüber hinaus in Umfangsrichtung versetzt zueinander angeordnet sind.

Die Schräge der ersten Messerhalter 12 des ersten Trommelbereichs 111 in Bezug zur Längsachse der Trommel 11 ist komplementär zur Schräge der zweiten Messerhalter 12 des zweiten Trommelbereichs 112, sodass die Messerhalter 12 und damit auch die daran angebrachten Messer im Ergebnis also V-förmig angeordnet sind.

Durch die V-förmige Messeranordnung wird das gehäckselte Erntegut zentriert, und kann dadurch besser weiterbefördert werden. Die abwechselnde Aufeinanderfolge von ersten Messerhaltern 12 des ersten Trommelbereichs 111 und zweiten Messerhaltern 12 des zweiten Trommelbereichs 112 in Umfangsrichtung der Messertrommel bewirkt eine zeitlich noch ausgeglichenere Belastung der Messertrommel und einen und einen noch ruhigeren Lauf derselben.

Es können auch mehr als die zwei Trommelbereiche 111 und 112 vorgesehen werden, beispielsweise vier Trommelbereiche mit zumindest teilweise unterschiedlicher Anordnung der Messerhalter / Messer.

Die in den Figuren 1 bis 3 gezeigte Messertrommel weist insgesamt 36 Messerhalter 12 auf und ist somit für 36 Messer ausgelegt. Es können selbstverständlich auch mehr oder weniger Messer vorgesehen werden, beispielsweise 32, 40, 44, oder noch mehr oder noch weniger Messer.

Als Messer können die auch bei herkömmlichen Messertrommeln verwendeten Messer zum Einsatz kommen. Im betrachteten Beispiel kommen gerade, ebene Messer zum Einsatz, doch ist auch die Verwendung von schaufelförmig gewölbten oder abgewinkelten Messern, oder von anders geformten Messern möglich. Durch die Verwendung gerader, ebener Messer lässt sich die Gefahr eines abrupten Stillstandes der Messertrommel aufgrund von Verstopfungen reduzieren. Vorzugsweise erfolgt die Wahl der Messer in Abhängigkeit von den gegebenen Verhältnissen und Vorgaben, beispielsweise unter anderem in Abhängigkeit vom zu häckselnden Erntegut, der Größe des Häckselgutes, etc.

Die hier vorgestellte Messertrommel 1 besteht aus Metall, beispielsweise aus Stahl, und zeichnet sich vor allem dadurch aus, dass die Trommel 11 und die daran vorgesehenen Messerhalter 12 eine durch ein einzelnes Frästeil gebildete zusammenhängende Einheit sind. Das heißt die Trommel mit den daran vorgesehenen Messerhaltern 12 wird aus einem geeigneten Rohling herausgefräst. Genauer gesagt werden bei der Herstellung die zwischen den Messerhaltern 12 liegenden Bereiche eines zylindrischen oder hohlzylindrischen Rohlings herausgefräst, sodass am Ende die Trommel 11 und die von dieser nach außen abstehenden Messerhalter übrig bleiben.

Damit sich das Frästeil während des Fräsens und auch danach nicht verzieht, wird der Rohling vor dem Fräsen vorzugsweise einer geeigneten Wärmebehandlung, beispielsweise einem Spannungsarmglühen unterzogen.

Im betrachteten Beispiel weist das Frästeil 1 eine Länge von ca. 579 mm und einen Außendurchmesser von ca. 710 mm auf. Die Trommel 11 (ohne die davon abgehenden Messerhalter 12) weist im betrachteten Beispiel einen Außendurchmesser von ca. 465 mm auf. Das Gewicht beträgt ca. 465 kg. Die genannten Maße hängen von dem Feldhäcksler ab, für welchen die Messertrommel vorgesehen ist, und können selbstverständlich unabhängig voneinander an die gegebenen Verhältnisse und Vorgaben angepasst werden.

Eine Messertrommel, die unter Verwendung des erwähnten Frästeils hergestellt ist, weist gegenüber einer herkömmlichen Messertrommel, bei welcher die Trommel und die Messerhalter nachträglich miteinander verbundene, beispielsweise miteinander verschweißte Einzelteile sind, mehrere Vorteile auf.

Erstens besteht zwischen durch Schweißen oder eine sonstige nachträgliche Verbindung verbundenen Einzelteilen keine so feste Verbindung wie zwischen von Haus aus zusammenhängenden, noch nie voneinander getrennten Komponenten eines Frästeils. Folglich können sich die Messerhalter 11 der Messertrommel 1 selbst bei größten Belastungen nicht relativ zur Trommel 12 bewegen oder sich gar von dieser lösen, auch nicht punktuell. Dadurch hält die hier vorgestellte Messertrommel höheren Belastungen stand und wird weniger häufig und/oder weniger stark beschädigt. Und wenn es zu Beschädigungen kommt, sind hiervon nur die Messer betroffen, die sich jedoch vergleichsweise einfach ersetzen lassen. Außerdem erfordert ein beschädigtes Messer im Allgemeinen nicht einen sofortigen Stop des Feldhäckslers. Die Arbeit kann meistens zumindest noch vorübergehend fortgesetzt werden, ohne den Feldhäcksler selbst ernsthaft zu beschädigen.

Zweitens lassen sich Frästeile mit höherer Präzision herstellen als aus Einzelteilen zusammengesetzte Vorrichtungen. Insbesondere ist bei einem Frästeil gewährleistet, dass die Trommel und jeder der Messerhalter sowie die Messerhalter untereinander exakt die vorgegebene Relativlage aufweisen. Außerdem besteht anders als etwa beim Schweißen nicht die Gefahr, dass sich die Einzelteile bei deren Verbindung verformen. Dadurch ist die erfindungsgemäße Messertrommel von Haus aus besser ausgewuchtet und somit geringeren Belastungen im Betrieb ausgesetzt als es bei herkömmlichen Messertrommeln der Fall ist.

Die bei herkömmlichen Messertrommeln auftretenden Probleme lassen sich auch durch eine stabilere Ausführung nicht oder jedenfalls nicht vollständig beheben. Es muss nach wie vor geschweißt werden, und die Schweißnähte und die Präzision sind und bleiben das Problem.

Es dürfte einleuchten und bedarf keiner näheren Erläuterungen, dass das gezeigte Frästeil in vielfacher Hinsicht modifizierbar ist. Insbesondere die Anzahl, die Anordnung und die Ausbildung der Messerhalter 12 sind mannigfaltig modifizierbar.

Das in den Figuren 4 bis 8 gezeigte zweite Ausführungsbeispiel des Frästeils entspricht nahezu vollständig dem zuvor beschriebenen, in den Figuren 1 bis 3 gezeigten ersten Ausführungsbeispiel.

Gleiche Bezugszeichen bezeichnen identische oder einander entsprechende Teile. Sofern nicht ausdrücklich etwas anderes erwähnt ist, gilt das vorstehend zum ersten Ausführungsbeispiel Gesagte in vollem Umfang auch für das zweite Ausführungsbeispiel.

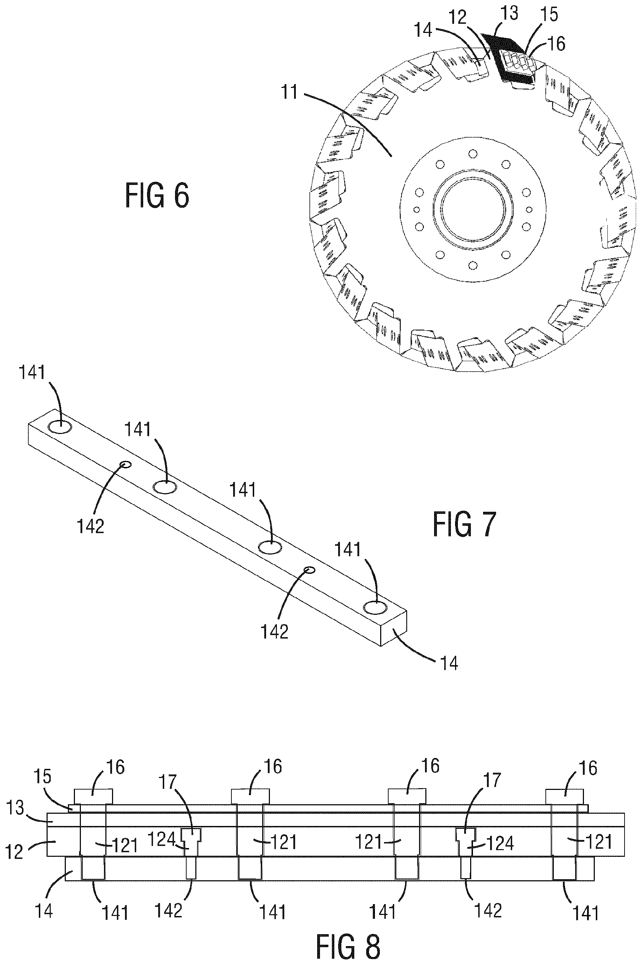

Das Frästeil 1 gemäß dem ersten Ausführungsbeispiel und das Frästeil 1 gemäß dem zweiten Ausführungsbeispiel unterscheiden sich nur in Bezug auf die Messerhalter 12. An den Messerhaltern 12 gemäß dem zweiten Ausführungsbeispiel sind andere Vorkehrungen zur Montage der Messer getroffen als beim ersten Ausführungsbeispiel. Genauer gesagt enthalten die Messerhalter 12 gemäß dem zweiten Ausführungsbeispiel die auch beim ersten Ausführungsbeispiel vorhandenen Löcher 121 zur Messermontage, aber zusätzlich noch zweite Löcher 124 zur Befestigung einer in der Figur 7 gezeigten Gewindeleiste 14 am jeweiligen Messerhalter 12.

Wie vorstehend bereits erwähnt wurde, sind im betrachteten Beispiel vier Löcher 121 pro Messerhalter 12 vorgesehen, wobei die Anzahl auch größer oder kleiner sein kann. Im betrachteten Beispiel sind pro Messerhalter 12 zusätzlich zwei Löcher 124 vorgesehen, wobei auch diese Anzahl größer oder kleiner sein kann und unabhängig von der Anzahl der Löcher 121 frei wählbar ist.

Wie nachfolgend noch näher erläutert wird, sind die Messerhalter 12 und die Gewindeleisten 14 so ausgebildet, dass die Gewindeleisten 14 durch die Löcher 124 durchlaufende und in die Gewindeleisten 14 eingedrehte Schrauben 17 an den Messerhaltern 13 fixierbar sind, und dass die Messer 13 durch die Löcher 121 durchlaufende und ebenfalls in die Gewindeleisten 14 eingedrehte Schrauben 16 an den Messerhaltern 12 anbringbar sind, wobei die Messer 13 und die Gewindeleisten 14 an einander gegenüberliegenden, vorzugsweise parallel zueinander verlaufenden Seiten der jeweiligen Messerhalter 12 zu liegen kommen.

Sämtliche Löcher 121, 124 in den Messerhaltern 12 durchlaufen die Messerhalter 12 vollständig von deren dem Messer 13 zugewandten Seite bis zu deren gegenüberliegenden, der Gewindeleiste 14 zugewandten Seite. Die Löcher 121 sind zylindrische Löcher, deren Durchmesser etwas größer ist als der Durchmesser des Schaftes der Schrauben 16. Die Löcher 124 haben ebenfalls einen kreisförmigen Querschnitt, doch ist der Durchmesser nicht überall gleich. Genauer gesagt weisen die Löcher 121 einen ersten zylindrischen Lochabschnitt mit einem größeren Durchmesser und einen sich in axialer Richtung daran anschließenden zweiten zylindrischen Lochabschnitt mit einem kleineren Durchmesser auf, wobei der erste Lochabschnitt den dem Messer 13 zugewandten Lochabschnitt bildet, und wobei der zweite Lochabschnitt den der Gewindeleiste 14 zugewandten Lochabschnitt bildet. Der erste zylindrische Lochabschnitt ist so ausgebildet, dass dieser den Kopf der Schrauben 17 vollständig in sich aufnehmen kann, sodass der Schraubenkopf also nicht aus dem Loch 124 herausragt. Der zweite, engere Lochabschnitt weist einen Durchmesser auf, der etwas größer als der Durchmesser des Schaftes, aber kleiner als der Durchmesser des Kopfes der Schrauben 17 ist.

Alle Löcher 121, 124 sind gewindelose Löcher, die nur zum Durchstecken der Schrauben 16, 17, genauer gesagt den Schäften derselben dienen. Die Schrauben 16, 17 werden in die Gewindeleisten 14 eingedreht, genauer gesagt in darin vorgesehene Gewindebohrungen 141, 142.

Die genannten Gewindebohrungen 141, 142 der Gewindeleisten 14 sind korrespondierend zu den Löchern 121, 124 angeordnet und fluchten bei bestimmungsgemäßen Zusammenbau mit diesen. Wie aus der Figur 8 ersichtlich ist,
- kommen die Gewindebohrungen 141 vor den Löchern 121 zu liegen und sind zum Eindrehen der die Löcher 121 durchlaufenden Schrauben 16 ausgelegt, und
- kommen die Gewindebohrungen 142 vor den Löchern 124 zu liegen und sind zum Eindrehen der die Löcher 124 durchlaufenden Schrauben 17 ausgelegt.

Auch die Messer 13 weisen in den Figuren nicht gezeigte Löcher auf, die korrespondierend zu den Löchern 121 der Messerhalter 12 angeordnet sind. Die in den Messern 13 vorgesehenen Löcher sind wie die Löcher 121, 124 der Messerhalter 12 gewindelose Löcher, die zum Durchstecken der Schrauben 16, 17, genauer gesagt den Schäften derselben dienen. Die in den Messern 13 vorgesehenen Löcher sind wie vorstehend bereits erwähnt vorzugsweise Langlöcher.

Vorzugsweise entspricht die Anzahl der Löcher 121 der Anzahl der Gewindebohrungen 141 und der Anzahl von Schrauben 16, und entspricht die Anzahl der Löcher 124 der Anzahl der Gewindebohrungen 142 und der Anzahl von Schrauben 17.

Die Montages eine Messers 13 an einem Messerhalter 12 ist in der Figur 8 veranschaulicht. Die Figur 8 zeigt eine Draufsicht auf den Messerhalter 12 und das daran angebrachte Messer 13. Die Figur 6 zeigt eine Seitenansicht eines Frästeils, bei welchem an einem der Messerhalter 12 ein Messer 13 wie in der Figur 8 gezeigt montiert ist.

Wie vorstehend bereits erwähnt wurde, erfolgt die Montage des Messers 13 am Messerhalter 12 unter Verwendung der Gewindeleiste 14, wobei das Messer 13 und die Gewindeleiste 14 an einander gegenüberliegenden Seiten des Messerhalters 12 zu liegen kommen.

Die Anbringung der Gewindeleisten 14 erfolgt unter Verwendung der Schrauben 17. Die Schrauben 17 werden von der von der Gewindeleiste 14 abgewandten Seite des Messerhalters 12 her durch die Löcher 124 hindurchgeführt und in die Gewindebohrungen 142 der Gewindeleiste 14 eingedreht. Die Köpfe der Schrauben 17 kommen dabei vollständig innerhalb der den größeren Durchmesser aufweisenden ersten Lochabschnitte der Löcher 124 zu liegen. Das heißt, die Schraubenköpfe ragen nicht nach hinten aus dem Messerhalter 12 heraus.

Nach erfolgter Fixierung der Gewindeleiste 14 am Messerhalter 12 kann die Montage des Messers 13 erfolgen. Dies geschieht unter Verwendung der Schrauben 16. Die Schrauben 16, genauer gesagt deren Schäfte werden von der vom Messerhalter 12 abgewandten Seite des Messers 12 durch die im Messer 13 vorgesehenen Löcher und die im Messerhalter 12 vorgesehenen Löcher 121 hindurchgeführt und in die Gewindebohrungen 141 der Gewindeleiste eingedreht.

Vorzugsweise ist an der vom Messerhalter 12 abgewandten Seite des Messer 13 noch eine zwischen dem Messer 13 und den Köpfen der Schrauben 16 zu liegen kommende Deckplatte 15 vorgesehen. Diese Deckplatte 15 weist Durchgangslöcher für die Schrauben 16 auf, die aber nur wenig größer als die Schäfte der Schrauben 16 sind, sodass die Deckplatte 15 die Langlöcher der Messer 13 bedeckt und verhindert, dass sich darin Erntegut, Häckselgut, Schmutz, etc. sammeln kann.

Aufgrund der Tatsache, dass die Gewindeleiste 14 durch die eigens hierfür vorgesehen Schrauben 17 bereits vor der eigentlichen Messermontage am Messerhalter 12 fixiert ist, lässt sich die eigentliche Messermontage unter Verwendung der Schrauben 16 schnell und einfach durchführen. Dies gilt auch für Messerwechsel.

Bei dem in den Figuren 1 bis 3 gezeigten ersten Ausführungsbeispiel des Frästeils ist dies nicht möglich. Die Messerhalter 12 dieses Frästeils 1 weisen nur die Löcher 121, aber keine zusätzlichen Löcher 124 für die separate Vormontage der Gewindeleiste 14 auf. Entsprechend weist die Gewindeleiste 14 auch keine zugeordneten Gewindebohrungen auf. Daher können hier das Messer 13 und die Gewindeleiste 14 nur gleichzeitig durch die Schrauben 16 aneinander und am Messerhalter 12 befestigt werden. Dies ist erkennbar sehr viel aufwendiger als es bei einer fest vormontierten Gewindeleiste 14 der Fall ist. Besonders groß ist der Aufwand bei einem Messerwechsel, weil hierbei zusätzlich dafür gesorgt werden muss, dass sich an der Trommel anhaftende Verunreinigungen nicht von dieser lösen und zwischen Gewindeleiste 14 und Messerhalter 12 gelangen. Nichtsdestotrotz ist auch die beim ersten Ausführungsbeispiel durchzuführende Messermontage eine praktikable Messermontage-Möglichkeit, zumal es ja aufgrund der höheren Stabilität des Frästeils weniger häufig zu einen Messerwechsel erfordernden Beschädigungen kommt.

Es dürfte einleuchten und bedarf keiner näheren Erläuterung, dass die beim zweiten Ausführungsbeispiel gemäß den Figuren 4 bis 8 vorgesehene Messermontage und die dafür zu treffenden Vorkehrungen auch bei herkömmlichen Messertrommeln, das heißt bei Messertrommeln, bei welchen die Trommel 11 und die Messerhalter 12 nicht durch ein einzelnes Frästeil 1 gebildet werden, vorgesehen werden können.

Die hier vorgestellte Messertrommel weist sich unabhängig von den Einzelheiten der praktischen Realisierung als äußerst vorteilhaft. Durch deren vorstehend beschriebene Besonderheiten lassen sich die Häufigkeit und/oder die Schwere von Beschädigungen der Messertrommel erheblich reduzieren, und unabhängig hiervon sind auch die Messermontage und der Messerwechsel schneller und einfacher durchführbar.

### Bezugszeichenliste

- 1: Frästeil der Messertrommel
- 11: Trommel
- 111: erster Trommelbereich
- 112: zweiter Trommelbereich
- 12: Messerhalter
- 121: Löcher in 12 zur Durchführung von 16 (für die Befestigung von 13 an 12)
- 122: Rampenabschnitt von 12
- 123: Stufe in 12
- 124: Löcher in 12 zur Durchführung von 17 (zum Anschrauben von 14 an 12)
- 13: Messer
- 14: Gewindeleiste
- 141: Gewindebohrung in 14 zum Eindrehen von 16
- 142: Gewindebohrung in 14 zum Eindrehen von 17
- 15: Deckplatte
- 16: Schraube zur Befestigung von 13 an 12
- 17: Schraube zur Befestigung von 14 an 12

## Patentansprüche

1. Messertrommel, die als Schneidorgan einer Häcksel- oder Schreddervorrichtung, insbesondere als Schneidorgan eines Feldhäckslers verwendbar ist und zur Zerkleinerung von zu zerkleinerndem Material, insbesondere zur Zerkleinerung von Erntegut ausgelegt ist, umfassend
- eine zylinderförmige, um ihre Längsachse drehbare Trommel (11),
- an der Mantelfläche der Trommel vorgesehene Messerhalter (12), und
- an den Messerhaltern befestigte Messer (13) zur Zerkleinerung des zu zerkleinernden Materials,
**dadurch gekennzeichnet, dass** die Trommel und die daran vorgesehenen Messerhalter eine durch ein einzelnes Frästeil (1) gebildete zusammenhängende Einheit sind.

2. Messertrommel nach Anspruch 1, **dadurch gekennzeichnet, dass** die Messer (13) mit an den Messerhaltern vormontierbaren Gewindeleisten (14) verschraubt sind.

3. Messertrommel, die als Schneidorgan einer Häcksel- oder Schreddervorrichtung, insbesondere als Schneidorgan eines Feldhäckslers verwendbar ist und zur Zerkleinerung von zu zerkleinerndem Material, insbesondere zur Zerkleinerung von Erntegut ausgelegt ist, umfassend
- eine zylinderförmige, um ihre Längsachse drehbare Trommel (11),
- an der Mantelfläche der Trommel vorgesehene Messerhalter (12), und
- an den Messerhaltern befestigte Messer (13) zur Zerkleinerung des zu zerkleinernden Materials,
**dadurch gekennzeichnet,**
**dass** die Messer mit an den Messerhaltern vormontierbaren Gewindeleisten (14) verschraubt sind.

4. Messertrommel nach Anspruch 2 oder 3, **dadurch gekennzeichnet, dass** die Messer (13) und die Gewindeleisten (14) an einander gegenüber liegenden Seiten der Messerhalter (12) zu liegen kommen.

5. Messertrommel nach Anspruch 4, **dadurch gekennzeichnet, dass** die Gewindeleisten (14) durch eigene, nicht zur Messerbefestigung dienende Schrauben (17) an den Messerhaltern (12) montiert sind.

6. Messertrommel nach Anspruch 5, **dadurch gekennzeichnet, dass** die Schrauben (17) von der von den Gewindeleisten (14) abgewandten Seiten der Messerhalter (12) her in in den Gewindeleisten vorgesehene Gewindebohrungen (142) eingedreht sind.

7. Messertrommel nach Anspruch 5 oder 6, **dadurch gekennzeichnet, dass** die Messerhalter (12) derart ausgebildet sind, dass die Köpfe der Schrauben (17) innerhalb von in den Messerhaltern vorgesehenen Vertiefungen (124) zu liegen kommen, also nicht aus den Messerhaltern (12) herausragen.

8. Messertrommel nach einem der Ansprüche 3 bis 7, **dadurch gekennzeichnet, dass** die Messer (13) durch Schrauben (16) mit den Gewindeleisten (14) verbunden sind.

9. Messertrommel nach Anspruch 8, **dadurch gekennzeichnet, dass** die Schrauben (16) von der von den Messerhaltern (12) abgewandten Seiten der Messer (13) her in in den Gewindeleisten (14) vorgesehene Gewindebohrungen (141) eingedreht sind.

10. Messertrommel nach einem der Ansprüche 3 bis 9, **dadurch gekennzeichnet, dass** die Trommel (11) und die daran vorgesehenen Messerhalter (12) eine durch ein einzelnes Frästeil (1) gebildete zusammenhängende Einheit sind.

11. Messertrommel nach Anspruch 1 oder 10, **dadurch gekennzeichnet, dass** das Frästeil (1) ein wärmebehandeltes Frästeil ist.

12. Messertrommel nach einem der Ansprüche 1, 10 und 11, **dadurch gekennzeichnet, dass** das Frästeil (1) ein spannungsarmgeglühtes Frästeil ist.

13. Messertrommel nach einem der Ansprüche 1 und 10 - 12, **dadurch gekennzeichnet, dass** jeder der Messerhalter (12) durch eine von der Mantelfläche der Trommel (11) im wesentlichen radial emporragende längliche Erhebung gebildet wird, welche eine etwa der Länge der Messer entsprechende Länge aufweist, und dass die der Trommel zugewandten unteren Endabschnitte der Messerhalter über deren gesamte Länge vollflächig mit der Trommel verbunden sind.

14. Messertrommel nach einem der Ansprüche 1 und 10 - 13, **dadurch gekennzeichnet, dass** die Messerhalter (12) in ihren der Trommel (11) zugewandten unteren Endabschnitten eine größere Dicke aufweisen als weiter oben.

15. Messertrommel nach Anspruch 14, **dadurch gekennzeichnet, dass** wenigstens eine der Längsseiten eines jeden Messerhalters (12) über einen im unteren Endabschnitt des Messerhalters ausgebildeten Rampenabschnitt (122) des jeweiligen Messerhalters rampenförmig zur Trommel (11) hin abfällt.
